# EUROPEAN PATENT APPLICATION

(11) **EP 1 217 232 A1**
(43) Date of publication of application: **26.06.2002**
(21) Application number: 99940493.2
(22) Date of filing: 25.08.1999
(51) Int. Cl.: F16B 39/284

(54) **LOCK NUT**

(71) Applicant: Hard Lock Kogyo Co., Higashiosaka-shi, Osaka 577-0063 (JP)
(72) Inventor: Wakabayashi, Katsuhiko, Osaka-shi, Osaka 559-0007 (JP)
(74) Representative: Albrecht, Ralf, Dipl.-Ing.
(86) International application number: JP9904604
(87) International publication number: WO0114753

(57) **Abstract**

An anti-loosening nut of the invention has a nut body (1) made of a metal and having a cylindrical part (3) formed with a female thread (5). The nut has also a seat (7) protruding outwards from the lower end of part (3) and having a lower face to contact an article (30) to be fastened. The nut further has ribs (13) continuing from the seat's upper face (7) to the part's periphery (3). Formed in the seat's lower face (7) is a recess whose wall surface is curved towards the axis of nut so as to be distorted due to reaction from the article's region in contact with the seat (7) when the thread (5) is screwed on a male thread (23). The ribs (13) transmit to the part (3) a pressure which the article (30) exerts on the seat (7), so that the tightening of nut with a predetermined force or higher will distort this seat to ensure the anti-loosening effect.

## Description

### FIELD OF THE INVENTION

The present invention relates to an anti-loosening nut.

### BACKGROUND OF THE INVENTION

An example of the conventional anti-loosening nuts known in the art comprises a cylindrical body tapped to have a female-threaded bore, whose inner surface is coated with a synthetic resin lining. A wrenching torque which a spanner or the like tool applies to such a nut will cause plastic deformation of the resin lining, thereby protecting it from unintentionally loosening itself.

Some samples of the prior art anti-loosening nut were tested using a vibration/shock tester of the American standard "NAS 3350" to evaluate their anti-shock performance. They loosened themselves very early within several seconds or within several tens of seconds, thus slipping off bolts mating them. This means that those anti-loosening nuts are not reliable enough for usage in certain severe fields such as railways or steel bridges, so that they must often be subject to maintenance works. Their internal resin linings suffer from deterioration in the course of time, rendering un-durable their anti-loosening effect. A torque for fastening such nuts will vary under the influence of temperature change, which causes the resin lining to expand or to shrink. Therefore, a final fastening torque applied to the nut does contribute to the anti-loosening effect not necessarily as a whole but merely in part, and ratio of this part to the whole torque varies *case-by-case* to a remarkable extent. Further, if such nuts are repeatedly attached to and detached from the same or different bolts, then their resin linings will be rubbed off soon to diminish or lose the anti -loosening effect.

The present inventor proposed an improved type anti-loosening nut in view of these drawbacks of the prior art ones, and his proposal has matured as the USP No. 5,827,027. This nut according to his previous proposal is caulked at its outer periphery to enhance its anti-loosening effect, but has however proved somewhat problematic in that its inner periphery must be driven against a 'jamming' resistance along the male thread of a bolt when fastened thereon. Thus, a considerably strong torque has been required to make it difficult to quickly fasten the nut on any bolt.

As an easy means of protecting ordinary nuts from loosening, spring washers have been used each in combination with one nut. This technique has however failed to ensure a sufficient anti-loosening effect under severe conditions.

### DISCLOSURE OF THE INVENTION

An object of the present invention is therefore to provide an anti-loosening nut that is capable of being screwed quickly on a bolt and never-theless affords a sure and high anti-loosening effect.

The anti-loosening nut of the invention may comprise a washer having an upper and lower surfaces and a nut body formed integral with the upper surface, at least the lower surface having a central region curved upwards giving the washer a concave shape. Bolt-receiving axial bores are formed in and through the washer and the nut body. This nut is characterized in that a plurality of axial ribs are formed at angular intervals along an outer periphery of the nut body. The axial ribs protrude outwards radially of said nut body so at to serve as portions that inhibit the washer lower surface from becoming perfectly flat due to a pressure acting thereon, wherein the ribs as a whole are of a shape engaging with a fastening tool.

In operation, a bolt will be screwed in the axial bore of the nut body, with the washer's lower surface contacting an article to be fastened. By tightening the nut with a torque of a predetermined threshold or higher, a reaction from the article and working against the lower surface pressed on the article will make this surface almost flat but not perfectly flat. In such a fastened state, the torque that has been applied to the nut is accumulated as an extremely strong internal stress remaining within the axial ribs and the nut body, thus providing an excellent effect of preventing the loosening of the nut. Such a strained washer will impart a stronger influence to the lower region of nut body, than that which the washer exerts upon the upper region. Consequently, these lower and upper regions are in different states as to their contact with the nut body such that reliability of the anti-loosen-ing effect under vibratory conditions is improved furthermore.

It is to be noted in contrast with the present invention that, in the prior art using an ordinary nut body and a discrete spring washer, even a weak force will cause the latter to deform itself. Such a washer will fail to retain in the nut body a residual strong torque sufficient to ensure the anti-loosen-ing effect. If an excessive fastening torque (for instance of 2000 kgf•*cm* or more) is applied to them, then threads of nut and/or bolt would probably be destroyed. Contrary to the prior art, the nut's washer of the invention is formed integral with the nut's body so that any weak forces will not deform the former. A stronger fastening torque will however make the washer distorted more or less due to recesses each existing between the two ad-jacent axial ribs. An internal stress which such a strong torque generates will be transmitted by those axial ribs and distributed evenly throughout the nut body. Stress concentration does not take place at any portion of the female thread of nut body, so that plastic deformation or breakage thereof will be avoided.

Preferably in the invention, a plurality of such axial or longitudinal ribs may protrude at angular intervals and radially from the outer periphery of the nut body. The washer may have an outer diameter not only larger than that of the nut body but also larger than the diameter of a circle circum-scribed about all the axial ribs. In this case, an outermost peripheral zone of the washer will operate as if it were a flange protruding radially and outwardly from the lower end of nut body.

Each rib may continue smoothly from the upper surface of washer to the upper end of nut body, without any interruption, or may alternatively have a transverse slit at its intermediate height. In the latter case, the slit in each rib may be disposed close to a bottom thereof. Preferably, 'width' in axial direction of each slit is made smaller than a lift of the top of central concave above the lower surface of a rim portion of the washer, with 'depth' in radial direction of each slit being smaller than a radial distance by which each rib protrudes. If contrarily each slit's depth is made greater than each rib's protuberance, then such ribs can no longer be expected to prevent the washer's distortion. However even in this case, an easier flat-tening of washer with a relatively small fastening torque will leave therein an internal stress contributing more or less to the anti-loosening effect.

The axial ribs formed on and along the nut body may be shaped such as engaging with any conventional fastening tools, for instance a spanner, a box wrench or the like. Six ribs in an example are arranged respectively at six corners of a hexagonal nut, though the number of them may be three to six enabling use of any fastening tools for hexagonal nuts. A lesser num-ber of ribs within this range will facilitate distortion of the washer, render-ing it suited for the nuts of lower fastening torque type.

To manufacture the nut having integral axial ribs and an integral washer, a raw steel piece may preferably be forged at first into an objective shape and then quenched to increase its hardness. Machining (viz., cutting) or the like other techniques may alternatively be employed to produce the nuts of the invention.

From another aspect of the invention, an anti-loosening nut comprises a nut body, a flange and a plurality of axial ribs, wherein the nut body has a female-threaded bore to be screwed on a male-threaded bolt. The flange protrudes radially of the nut body and outwards from a bottom thereof, and has a lower surface that is to be pressed on an article when fastening it using the nut together with the bolt. The axial ribs formed integral with an outer peripheral surface of the nut body are shaped such that they may be brought into engagement with a spanner or the like fastening tool. The lower surface of the flange has a central region curved upwards to provide a concave recess such that the flange will be distorted due to a reaction from the article's surface region, to which the flange is urged by screwing the male thread into the female thread. In detail, the reaction from the article being fastened is transmitted from the flange to the nut body through the axial ribs. A plurality of the axial or longitudinal ribs are preferably arranged at regular angular intervals along an outer periphery of the nut body, such that each rib protrudes outwards radially thereof.

### BRIEF DESCRIPTION OF THE DRAWINGS

Fig. 1 is a schematic perspective view of an anti-loosening nut pro-vided in an embodiment of the present invention;
Fig. 2 is a plan view of the anti-loosening nut shown in Fig. 1;
Fig. 3 is a front elevation of the anti-loosening nut shown in Fig. 1;
Fig. 4 is a cross section taken along the line A - A in Fig. 2;
Fig. 5 is a vertical cross section of an anti-loosening nut provided in a further embodiment;
Fig. 6 is a vertical cross section of the nut shown in Fig. 1 and fastened onto an article;
Fig. 7 is a vertical cross section of the nut shown in Fig. 5 and fastened onto an article and;
Fig. 8 is a plan view of an anti-loosening nut provided in a still further embodiment;
Fig. 9 is a plan view of an anti-loosening nut provided in a yet still further embodiment;
Fig. 10 is a front elevation of the anti-loosening nut shown in Fig. 9; and
Fig. 11 is a cross section taken along the line B - B in Fig. 9.

### BEST MODES OF CARRYING OUT THE INVENTION

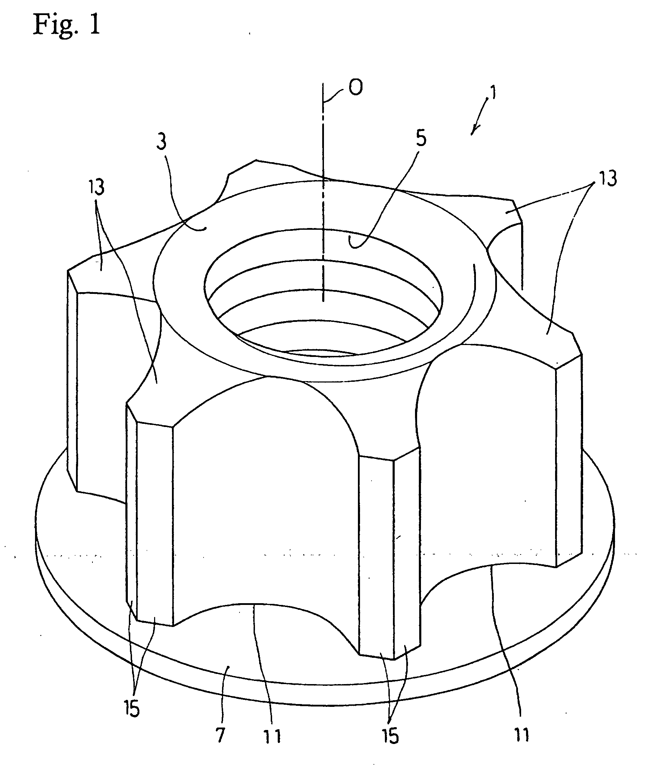

An anti-loosening nut 1 shown in Figs. 1 to 4 comprises a cylindrical nut body 3 that has a female thread 5 formed in and along a bore. This nut further comprises a washer (occasionally called 'flange') 7 and 'axial' ribs 13, wherein the washer protrudes in radial direction from the bottom of the nut body 3. Each axial rib 13 (extending axially of the nut body) con-tinues from the upper surface portion of washer 7 to the outer peripheral portion of nut body 3.

The anti-loosening nut 1 is an integral piece made of a metal such as a stainless steel or a carbon steel, preferably by the forging technique. The female thread 5 formed in the nut body 3 may generally be tapped after the forging process, or simultaneously formed during this process in case of smaller nuts each having an outer diameter of 10 *mm* or less.

When screwed on a bolt not shown, the lower surface of the washer 7 will contact an objective article 30 to be fastened. The washer 7 is curved down towards its outer peripheral zone (viz., its 'rim') so as to have a con-cave recess 9. The axis or center line of this recess 9 coincides with the axis 'O' of the nut. Only such a rim will contact a circular surface zone of the article 30 unless the washer is pressed thereto. In use, the nut having female thread 5 may be screwed on the bolt or the like member having a male thread 23. The circular surface zone of the article 30 will thus urge the washer 7 upwards, while the male thread 23 urging it down. Such an external force applied to this washer will force it to take a flatter shape (thus urging its lower and central zone towards the objective article).

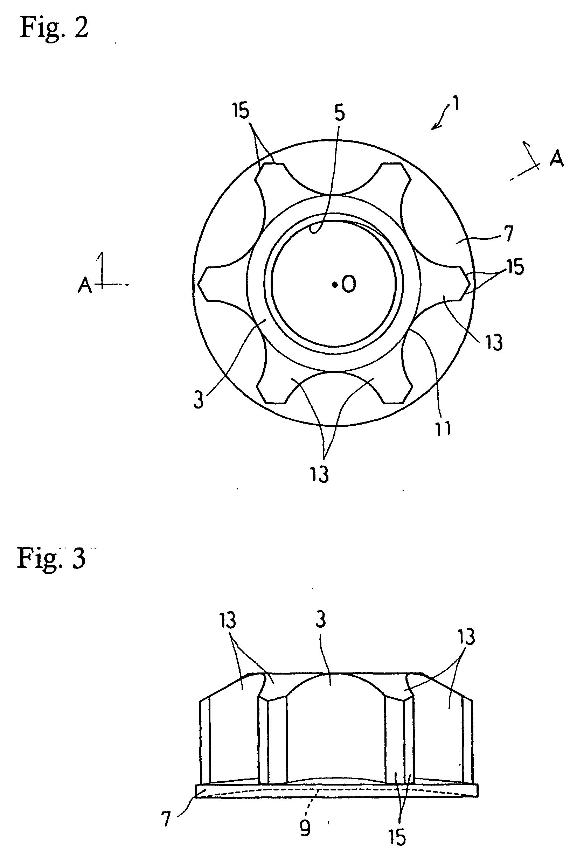

Each of the axial ribs 13 extends upwards from a corner 11 defined between the upper surface of washer 7 and the outer peripheral surface of nut body 3, and protrudes outwards in radial direction therefrom. Those ribs 13 reach the top of nut body 3 and terminate short of the outer peripheral edge of washer 7. A pressure which the washer 7 receives from the objective article 30 will be transmitted through the ribs 13 to the nut body 3. Thus, the washer pressed upwards and tending to become flatter will act on the ribs 13, and consequently the latter compressing the nut body 3 in a centripetal direction. As seen in Fig. 2 that is a plan view of the nut, each rib 13 thereof gradually increases its width towards the axis 'O'.

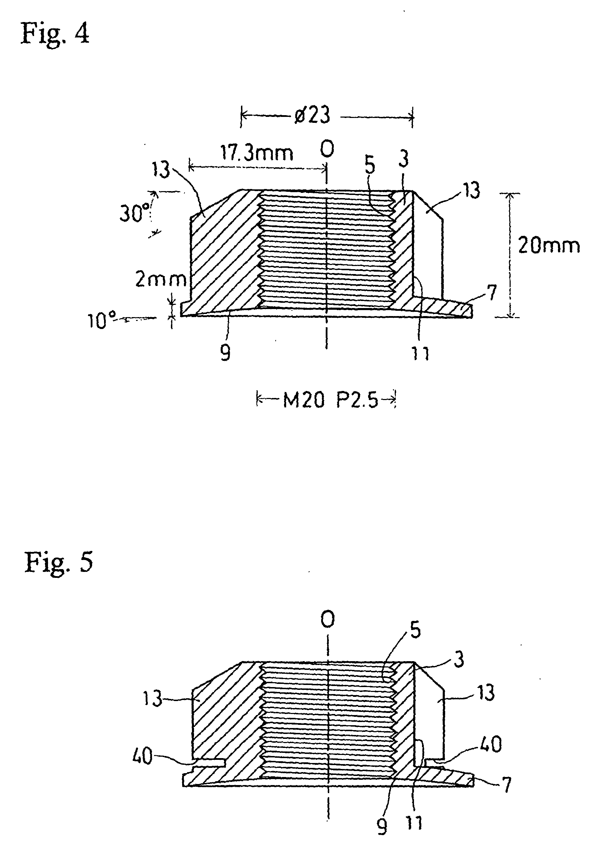

The number of those ribs 3 protruding radially from the nut body's 3 periphery is two or more, and six in the present embodiment. Each of those ribs 3 has flat end surface regions 15 that will engage the corre-sponding inner surface regions of a spanner or the like wrench. Such sur-face regions 15 belonging to two diametrically disposed ribs 13 lie in paral-lel with each other across the axis 'O' so as to enable a neat engagement thereof with the spanner. Thanks to this feature, the ribs can transmit to the nut body 3 not only the force from washer 7 but also a torque which the spanner will exerts on them. One of the two end surface regions 15 of one rib 13 and that 15 of another 13 adjacent thereto are included in a common straight line in plan view. Each rib may be formed smooth from top to bottom as shown in Fig. 4, without any interruption involved therein. Al-ternatively, each rib 3 may have a slit 40 formed near its bottom, as shown in Fig. 5. In this case, each slit 40 may preferably be of a depth (in radial direction) less than protuberance (also in radial direction) of the axial rib so that an uncarved portion remains behind such a slit 40 in the body 3 will function as the means of suppressing distortion of washer 7.

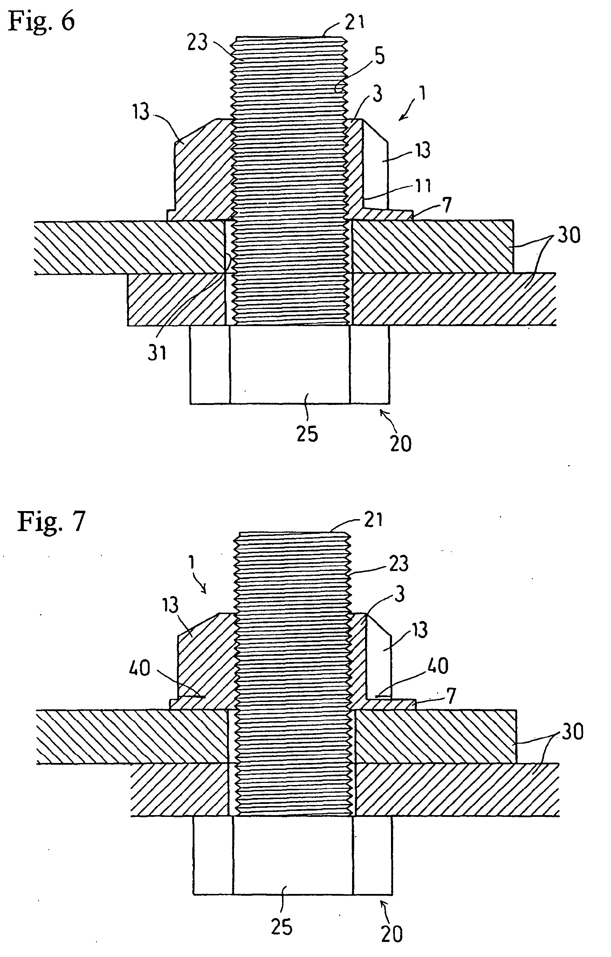

An operation for fastening the object 30 with use of the anti-loosening nut will now be described referring to Fig. 6. In this example, two plates 30 each having an aperture 31 for receiving the threaded body 21 of a bolt 20 have to be fixed one on another.

At first, two apertures 31 of plates 30 and the bore (female-threaded at 5) are aligned with each other, before the body 21 of bolt 20 is inserted through the plates and screwed in the nut 1. Then, this nut will be tightened on the bolt 20 until its washer 7 is forced onto the upper plate 30. Since no resin lining has been applied to the female thread 5, the tightening of nut 1 on the bolt 20 can be done quickly and easily with a moderate power. Subsequent to this preliminary step, a torque wrench or the like mighty tool may be used to impart a stronger torque to the nut 1 (having such a female thread 5) in order to further screw it on the bolt 20. A resultant rotation of the bolt 20 relative to the nut 1 will force its body 3 towards the plates 30, against a reaction from a surface area thereof press-ing the washer 7 upwards. This upward force exerted on the washer will make it flatter or completely flat, while being transmitted by the ribs 13 to the nut body 3. As a result, the fastening torque is distributed to and ac-cumulated in those washer 7, ribs 13, and nut body 3. The sum of such portions of internal stress will bring about an extraordinarily high contact pressure not only between the female thread 5 of nut body 3 and the male thread 23 of bolt 20, but also between the washer 7 and the objective article 30, thereby affording an excellent anti-loosening effect even under very severe conditions.

Any special fastening tool is not necessary for the nut to be driven to rotate relative to the bot 20, because an ordinary spanner can firmly engage with the ribs 13.

It also will be apparent that preliminary operation for setting the nut in place where its washer 7 initially contacts the article 30 does however not require any noticeable torque, so that a final tightening torque will contri-bute almost in its entirety to the anti-loosening effect.

The anti-loosening nut of the invention can be reused after removal thereof from the bolt or the like mating member. This is because it will generally restore its original shape, thanks to elastic recovery. However, it is to be noted that any other types of such a nut which undergo plastic deformation disabling reuse once removed from the bolt are also included in the scope of the present invention.

Another anti-loosening nut of the invention shown in Fig. 5 will be tightened on the bolt in a fashion shown in Fig. 7. As seen there, this nut having slits 40 will surely make its washer 7 perfectly flat so that facial contact of the washer with an objective article is ensured. In this embodi-ment, width of each slit 40 in axial direction of the nut is made moderately smaller than a distance by which the washer's 7 rim portion is depressed up towards the nut body. Therefore, a pressure acting upwards on such a washer 7 will be transmitted through the ribs 13 to tops thereof, enabling this nut to produce an effect similar to that which the first-mentioned one does. The present invention includes a nut having slits 40 whose width in axial direction is smaller than a distance by which its washer 7 deforms itself in the same direction. Also in this case the washer is formed integral with the nut body, with each axial rib having a residual thickness portion inside the bottom of the corresponding slit 40, thereby affording a satis-factory anti-loosening effect. Depression or collapsing of the slits 40 will not take place unless a tightening torque exceeds a predetermined level, so that by virtue of such a collapse of slits visual confirmation of the nuts tightened with a predetermined torque or higher. Thus any torque wrench, which would render much dangerous the 'high-ground' operations, is no longer necessary to be beneficial to workers.

Vibration/shock tests were conducted on some examples of the nuts of the invention so as to evaluate their anti-loosening effect, to give a result as listed in the following table:

| Examples | Outer dia. & thick. of washer | Tightening torque | Performance | Residual torque |
|---|---|---|---|---|
| No. 1 | 40Ø × 2 *mm* | 2800 kgf•*cm* | no loosening | 2800 kgf•*cm* |
| No. 2 | 40Ø × 2 *mm* | 2200 kgf*•cm* | no loosening | 2000 kgf•*cm* |
| *Notes: The abbreviations 'dia.' and 'thick.' denote -diameter-and -thickness-, respectively.* | | | | |

In this table, Example No. 1 was a nut shown in Figs. 1 to 4, with its dimen-sion being exemplified in Fig. 4. Example No. 2 was another nut of the same dimension as shown in Fig. 5, and had slits whose width measured in axial direction of the nut was 1 *mm.* These Examples were made by forging raw carbon steel pieces each containing 0.45 % of carbon (JIS G 4051: S45C), and then annealing them to be of a representative hardness (HRC) of 35. Their performance was rated using a vibration/shock tester of the American standard "NAS 3350" to measure time (17 minutes at long-est) until loosening had occurred. Ordinary nuts (JIS Grade-1) loosened themselves by 20 seconds.

This result tells that the present invention affords a very excellent anti-loosening effect. Particularly, the residual torque in the nuts was of the same strength as that of the tightening torque, indicating neither loosening nor collapse of threads although subjected to very severe vibratory condi-tions for a very long time reaching 17 minutes.

It also be apparent that even such a surprisingly strong tightening tor-que applied to the nuts as in the tests discussed above would never break their threads but be retained for long without impairing their anti-loosening effect.

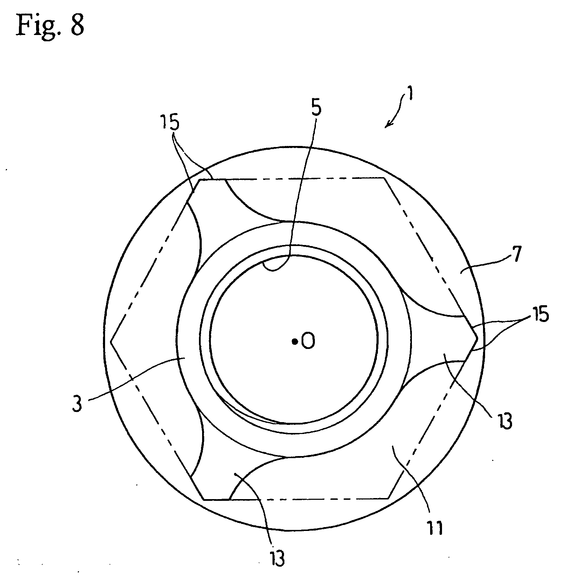

Fig. 8 illustrates a further embodiment wherein this nut comprises merely three axial ribs 3, providing larger recesses each intervening be-tween two neighboring ribs. A flange 7 of this nut is more prone to be distorted, so that even a relatively weak fastening torque suffices well to ensure the required level of anti-loosening effect, by virtue of the flange's resiliency.

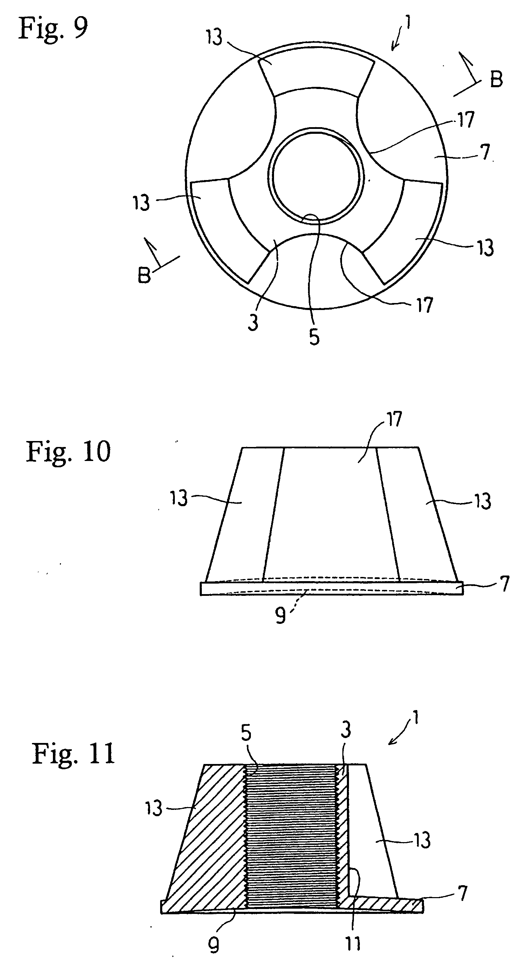

Figs. 9 to 11 show a still further embodiment, in which three axial ribs 13 protruding in radial direction are formed around this nut at regular an-gular intervals. Defined between two neighboring ribs 13, which may be formed by the machining technique, are accessible recesses for engagement with a special fastening tool. Also in this nut, each rib 13 may likewise have at an intermediate height thereof a slit.

## Claims

1. An anti-loosening nut comprising a washer having an upper and lower surfaces and a nut body formed integral with the upper surface, at least the lower surface having a central region curved upwards giving the washer a concave shape, and bolt-receiving axial bores formed in and through the washer and the nut body, **characterized in that** a plurality of axial ribs are formed at angular intervals along an outer periphery of the nut body, the axial ribs protruding outwards radially of said nut body so at to serve as portions that inhibit the washer lower surface from becoming per-fectly flat due to a pressure acting thereon, and wherein the ribs as a whole are of a shape engaging with a fastening tool.

2. An anti-loosening nut as defined in claim 1, wherein each rib continues smoothly without any interruption from the washer upper surface to an upper end of the nut body.

3. An anti-loosening nut as defined in claim 1, wherein each rib has at its intermediate height a transverse slit.

4. An anti-loosening nut as defined in claim 3, wherein each slit has in axial direction a width smaller than a lift of a top of the central concave region above the lower surface of a rim portion of the washer.

5. An anti-loosening nut comprising: a nut body, a flange and axial ribs, the nut body having a female-threaded bore to be screwed on a male-threaded bolt, the flange protruding radially of the nut body and outwards from a bottom thereof and having a lower surface to be pressed on an article when fastening it using the nut together with the bolt, the axial ribs being formed integral with an outer peripheral surface of the nut body and of such a shape as capable of engaging with a fastening tool such as a spanner, wherein the lower surface of the flange has a central region curved upwards to provide a concave recess such that the flange is capable of distortion due to a reaction from a surface region of the article when the flange is pressed thereto by forcibly screwing the male thread into the female thread, and wherein the reaction from the article being fastened is transmitted from the flange to the nut body through the axial ribs.

6. An anti-loosening nut as defined in claim 5, wherein a plurality of the axial ribs protrude radially from the outer peripheral surface of the nut body.

7. An anti-loosening nut as defined in claim 6, wherein each rib con-tinues from an upper surface of the flange to an upper end of the nut body.

8. An anti-loosening nut as defined in claim 6, wherein each rib has at its intermediate height a transverse slit.

9. An anti-loosening nut as defined in claim 8, wherein each slit has in axial direction a width smaller than a lift of a top of the central concave recess above the lower surface of a rim portion of the flange.
